# EUROPEAN PATENT APPLICATION

(11) **EP 4 311 746 A1**
(43) Date of publication of application: **31.01.2024**
(21) Application number: 23159862.4
(22) Date of filing: 03.03.2023
(51) Int. Cl.: B62D 25/16

(54) **SUPPORT FOR ANCHORING A MUDGUARD TO A VEHICLE**

(30) Priority: 25.07.2022 IT 202200003108 U
(71) Applicant: Lago Accessori S.r.l., 35014 Fontaniva (PD) (IT)
(72) Inventor: LAGO, Fabio, 35013 CITTADELLA PD (IT)
(74) Representative: Modiano, Micaela Nadia

(57) **Abstract**

A support (1) for anchoring a mudguard (2) of a vehicle, which is constituted by a tube (6) at a first end (7) of which a taper (10) with frustum shape structure is obtained, within which, by cold-deforming, a complementarily-shaped flange (15) is kept captive; the flange (15) comprises means for interconnection to the chassis (3) of the vehicle.

## Description

The present invention relates to a support for anchoring a mudguard to a vehicle, in particular for trucks or semi-trailer trucks or articulated vehicles or double HGVs or trailers or semitrailers.

Nowadays it is known, in the construction of trailers for transport by road, in operations to fit out a trailer, to add certain accessories that are required by regulations, such as for example mudguards.

The trailer is made up of a structure, the principal components of which are beams or profiles or longitudinal members, below which are fixed the axles that carry the wheels, and above which are fixed the superstructures that constitute the specific load configuration (compartment, refrigerated compartment, deck, tank and the like).

These longitudinal members are used as a fixing base for supports, which we will refer to as tubes or flanged tubes, which are thus used for fixing the mudguard by way of adapted means, for example of the type illustrated in WO2021/073784, in the name of this same Applicant.

Conventional mudguards are usually constituted by a single body, made of metal or of plastic material, with a curved shape of approximately 180 degrees that surrounds the upper surface of the wheels of the vehicle, with which further elements are later associated such as for example splash guards and/or elements that perform spray protection functions and elements for fixing to the vehicle.

To associate the mudguard with the vehicle, it is therefore known to use a tube which is cut and coupled at its end to a flange which can be round, triangular, square or irregular in shape, using the MIG/MAG wire welding process.

The coupling between said tubes and the chassis of the vehicle is usually achieved by way of affixing elements such as bolts, nuts and washers.

In particular, if round flanges are used, then a single bolt and washer are used when the flange has a female threading, or a nut and a washer when the flange has a male threading.

If triangular or square or irregularly-shaped flanges are used with fixing holes, then bolts, nuts and washers are used.

These solutions have some drawbacks, which often emerge in the process used to make the tube integral with the associated flanges.

In fact the welding process requires the use of gas, and therefore it requires specialist personnel who can use it and who are expert in order to be able to conduct the welding correctly.

The welding process is a process that is considered "dirty" for the production environment and for the product obtained, plus it is difficult to qualify, and non-destructive qualification processes are burdensome.

The welding process is also rather unstable and repetitive in terms of quality of the joint.

The fact should further be noted that the welding process leaves a more fragile area at the end of the weld seam, which could lead to the accidental breakage of the tube especially in view of the considerable stresses to which the tube is subjected during use of the vehicle.

The welding process further requires that the masses to be joined have a similar thermal inertia, which often, between a tube of adequate thickness and a flange that is turned or forged, is difficult to protect.

The welding process also leaves working residues on the welded join which need to be cleaned or removed through chemical and/or mechanical processes that are burdensome and often not environmentally friendly.

These drawbacks have the effect that the welding process is an obstacle to obtaining quality in the surface finishes of the metals.

Finally, the welding process requires the use of the same material for the tube and the flange.

The aim of the present invention is therefore to resolve the above-mentioned technical problems, eliminating the drawbacks in the cited known art and therefore devising a support that makes it possible to obtain, rapidly and easily and in an environmentally-friendly manner, the anchoring of a mudguard to a vehicle.

Within this aim, an object of the invention is to provide a support that makes it possible to obtain such anchoring repetitively and that offers structural stability in the absence of tensioning points and consequent fragility which could be the cause of possible breakages.

Another object of the invention is to provide a support that presents a surface that is uncontaminated and therefore ready to receive surface finish treatments like galvanization, painting, or cataphoresis.

Another object is to provide a support that, in addition to the foregoing characteristics, also combines that of being extremely resistant, of low weight and adequate to the workload to which it is subjected.

Another object is to provide a support that can be provided with materials that have different characteristics in order to increase the hold on the mudguard, and the fixing to the chassis of the vehicle.

Another object is to provide a support that is structurally simple and is low-cost.

This aim and these and other objects which will become better apparent hereinafter are achieved by a support for anchoring a mudguard to a chassis of a vehicle, characterized in that it is constituted by a tube at a first end of which a taper with a frustum shape structure is obtained, within which, by cold-deforming, a complementarily-shaped flange is kept captive, said flange comprising means configured for interconnection with said chassis of said vehicle.

Further characteristics and advantages of the invention will become more apparent from the detailed description of a particular but not exclusive embodiment thereof, illustrated by way of non-limiting example in the accompanying drawings, wherein:
Figure 1 is a perspective view of the anchoring support associated with a mudguard of a vehicle, according to the present invention;
Figure 2 is an exploded view of the support of the previous figure;
Figure 3 is a front elevation view of the support associated with a mudguard of a vehicle;
Figure 4 is a side view of the support coupled to the chassis of the vehicle;
Figure 5 is a side view of the support;
Figure 6 is a cross-sectional view taken along the line VI-VI of Figure 5;
Figure 7 shows a detail of the previous figure;

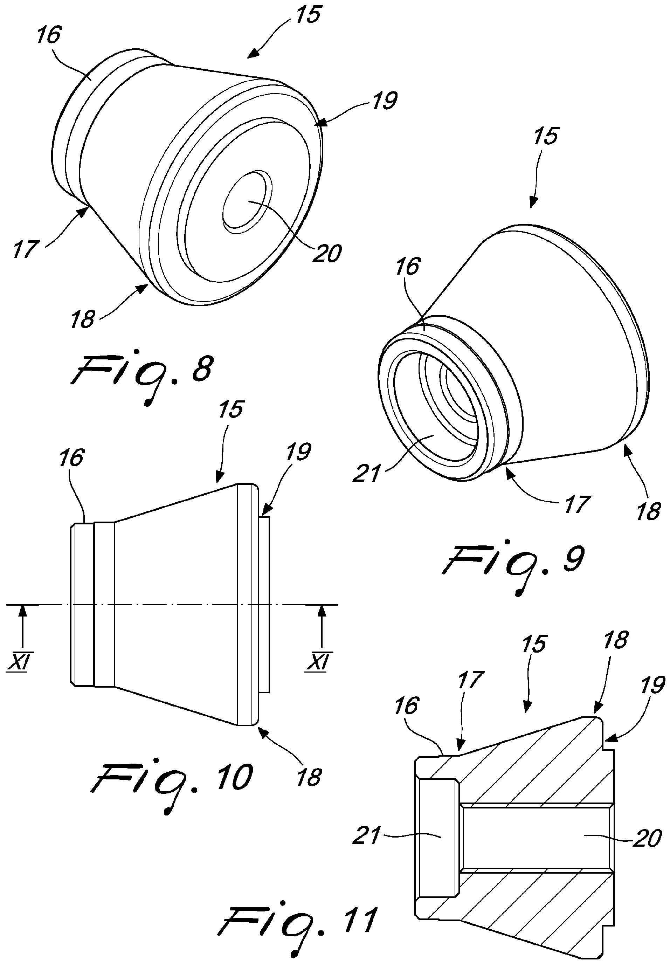

Figures 8, 9 and 10 are various views of a component of the support;
Figure 11 is a cross-sectional view taken along the line XI-XI of Figure 10;
Figures 12, 13 and 14 show the support in different configurations;
Figure 15 is an exploded view of the support of Figure 12 and the chassis of the vehicle;
Figure 16 is a view of the support in the previous figure which is similar to the view of Figure 6.

In the exemplary embodiments that follow, individual characteristics, given in relation to specific examples, may actually be interchanged with other, different characteristics that exist in other exemplary embodiments.

With reference to the figures, the reference numeral 1 generally designates a support for anchoring a mudguard 2 to a chassis 3 of a vehicle (not shown), in particular for trucks or semi-trailer trucks or articulated vehicles or double HGVs or trailers or semitrailers.

Transversely, the mudguard 2 has an approximately C-shaped curved shape structure, and lies substantially on a circular arc; it has, on the external surface 4 facing away from the tire, means 5, for example of the type illustrated in WO2021/073784 in the name of this same Applicant, adapted to fix the anchoring support 1 to the mudguard 2.

Such support is constituted by a tube 6, advantageously entirely hollow and of desired thickness, preferably circular in cross-section.

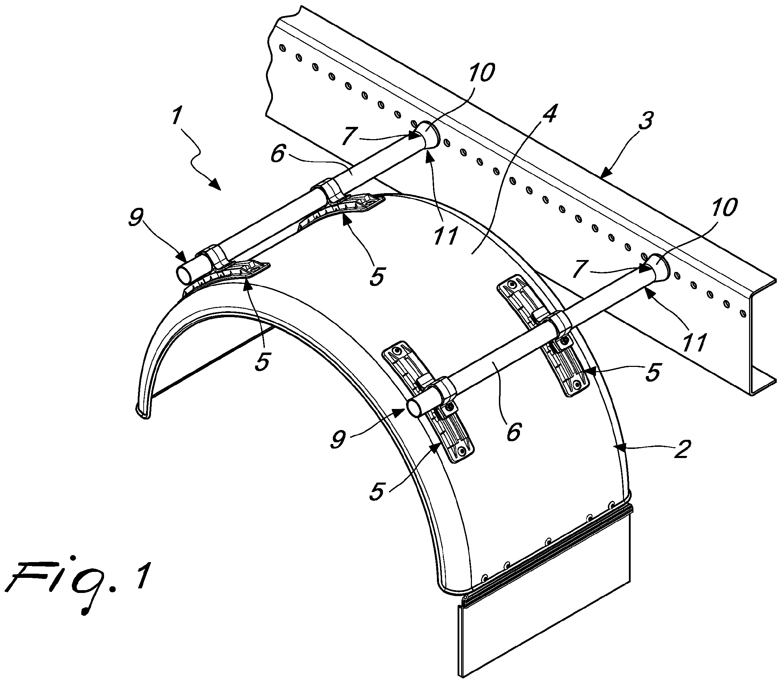

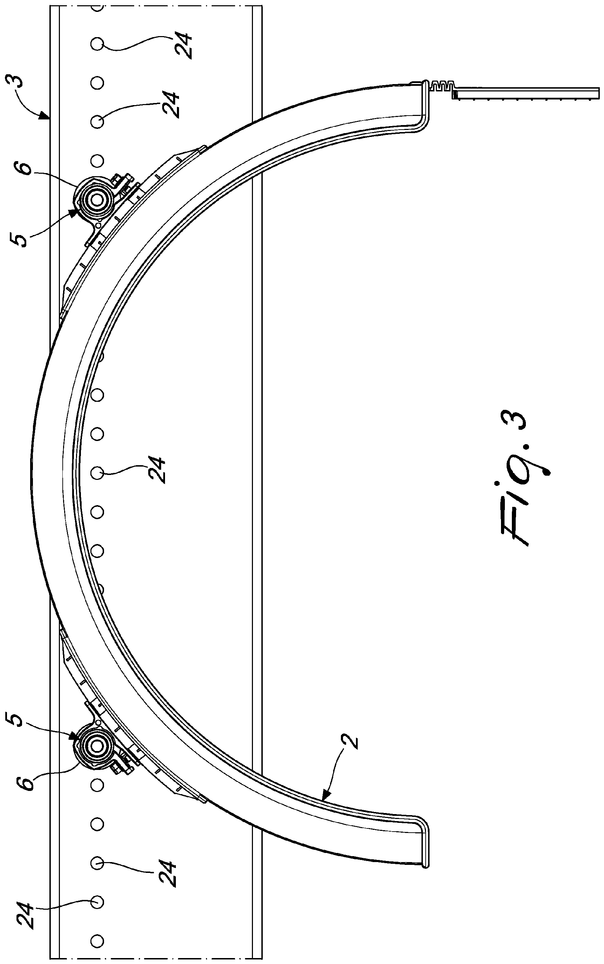

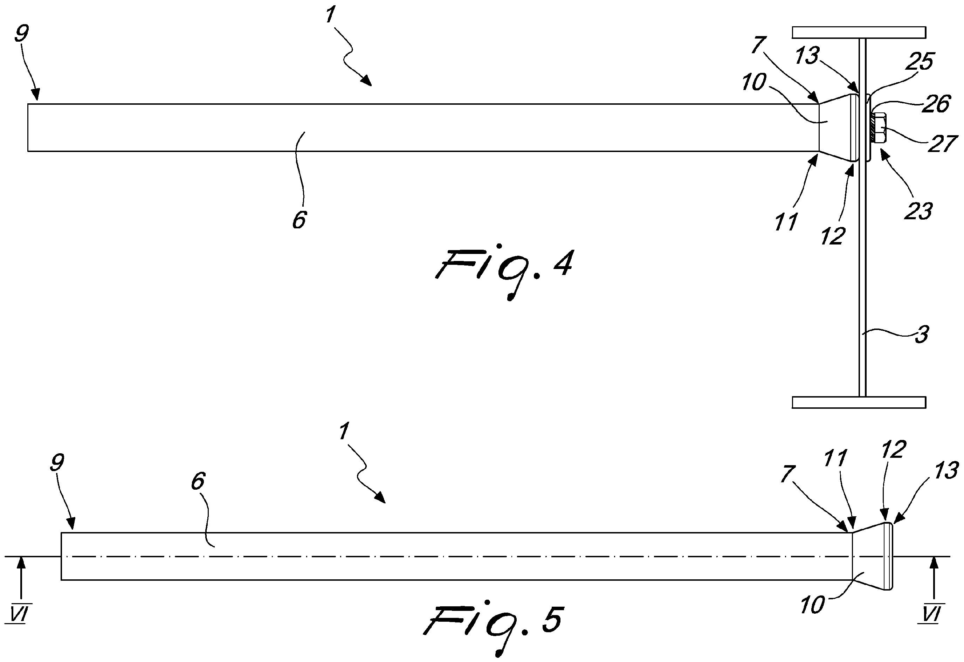

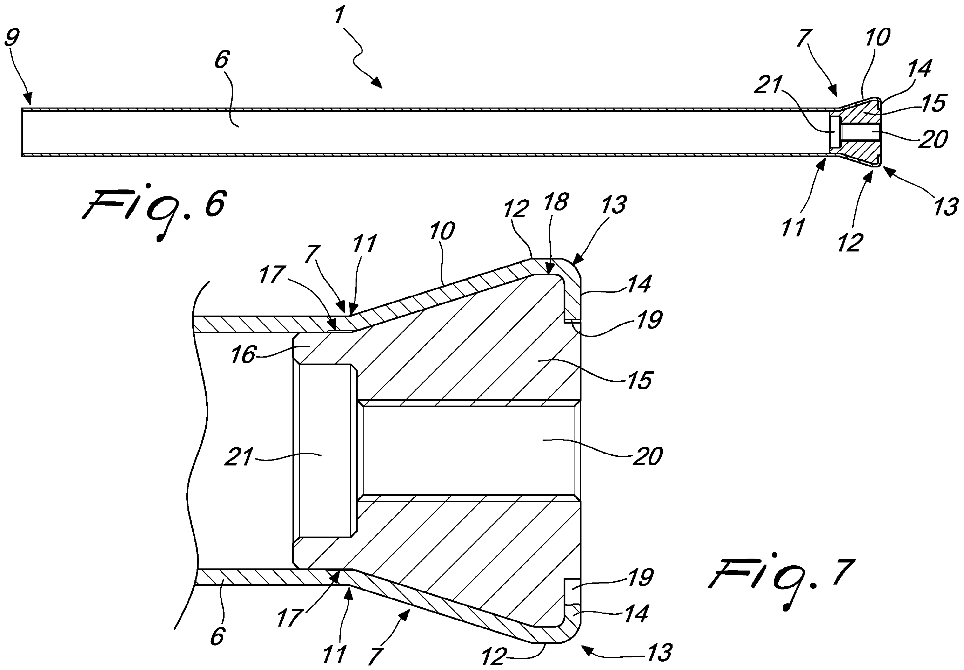

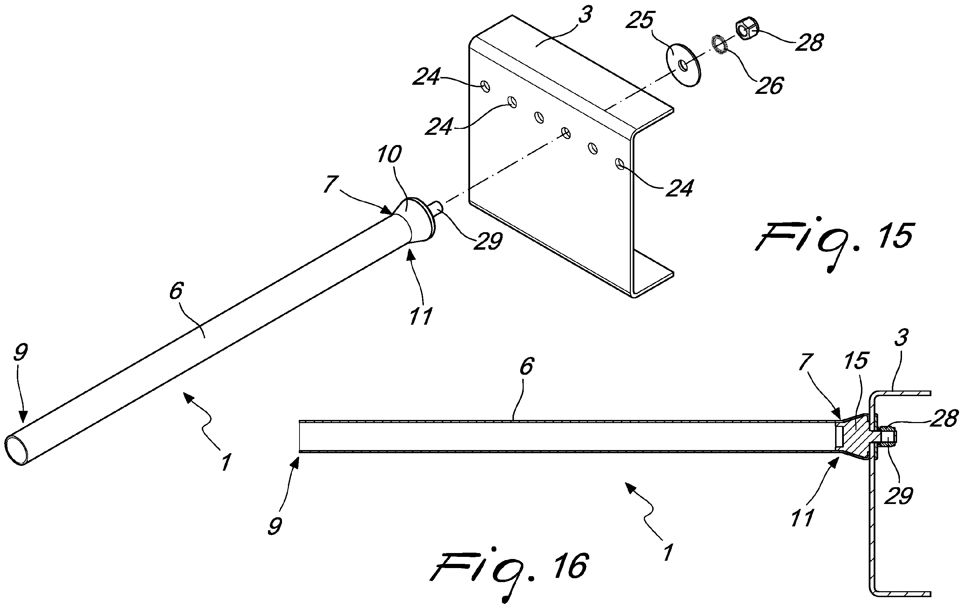

The tube 6 can have a linear extension, as shown in Figures 1 to 6, 12, 15 and 16, in which there are a first end 7 and a second, free end 9.

At the first end 7 the tube has a taper 10, obtained preferably by cold-deforming, which is frustum-shaped with a first minor base 11 blended with the tube 6 and the first major base 12 facing away and in the direction of the chassis 3 to which the tube 6 is to be coupled.

The major base 12 has the terminal end 13 upset, for example cold-upset, so as to assume an L shape with an end lip 14 arranged on a plane that is substantially perpendicular to the longitudinal axis of the tube 6.

The end lip 14 only partially overlaps the diameter of the major base 12 of the taper 10, preferably so as to occupy a space substantially equal to the diameter of the minor base 11.

Prior to the upsetting of the terminal end 13, a complementarily-shaped flange 15 is placed within the taper 10, the flange being frustum-shaped with an annular ridge 16, protruding from the second minor base 17 of the flange 15, of an outside diameter approximately equal to the inside diameter of the tube 6.

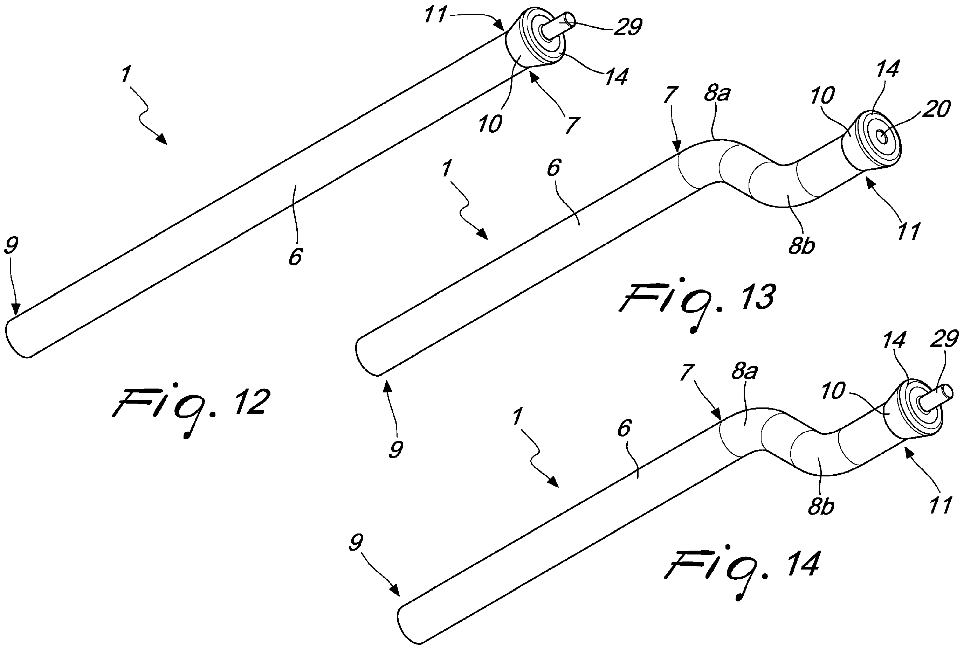

The tube 6 can be variously shaped; for example in Figures 13 and 14 the tube 6 has, starting from the first end 7, two curves 8a and 8b, mutually opposite and mutually sequential, so that the taper 10 which can be associated with the chassis 3 ends up being arranged, when installed, at a point different from the point of arrangement of the second, free end 9 of the tube 6.

An annular perimetric seat 19 is provided at the second major base 18 of the flange 15, for part of its thickness, at which the complementarily-shaped end lip 14 of the terminal end 13 of the taper 10 is cold-upset.

In this way the flange 15 is locked in place/held captive within the taper 10 with a stable and non-removable connection between the two components.

A first axial seat 20 is provided axially to the flange 15 and communicates, at the second minor base 17 of the flange 15, with a second axial seat 21 which is provided at the annular ridge 16.

Advantageously the second axial seat 21 has a larger diameter than the first axial seat 20.

The first axial seat 20 and the second axial seat 21 combine to define means for interconnecting the tube 6 with the chassis 3 of the vehicle.

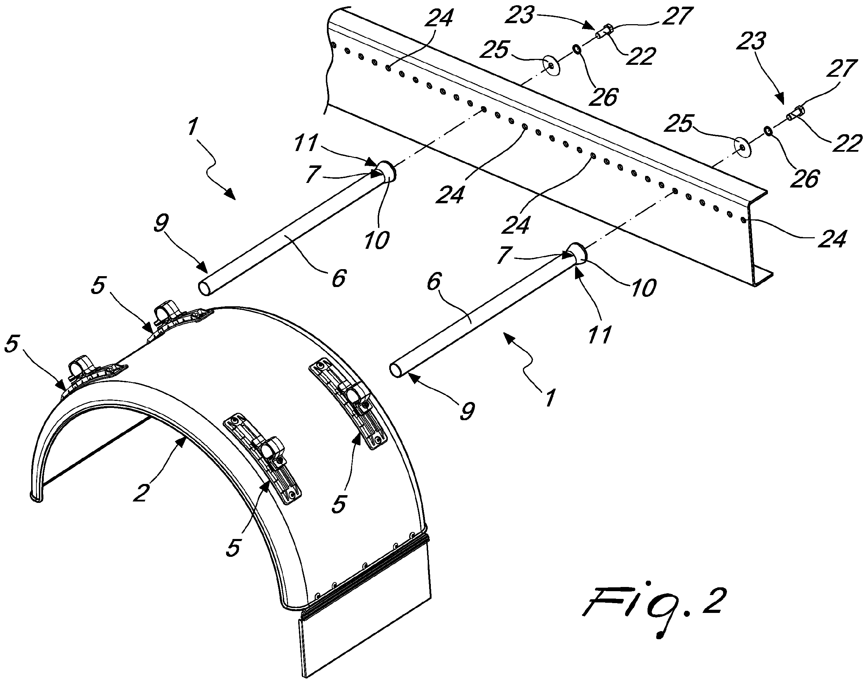

In fact the first axial seat 20 can be internally threaded for interconnection with a complementarily-threaded first shank 22 of a bolt 23 that passes through one of a plurality of holes 24 which are provided in desired points on the chassis 3, as shown in Figure 2.

Advantageously a first washer 25 and a second, vibration-damping washer 26 can be arranged on the first shank 22 and interposed between the chassis 3 and the head 27 of the bolt 23.

As an alternative to the threading of the first axial seat 20, a nut 28 can be stably positioned within the second axial seat 21, and the threaded first shank 22 be screwed therein.

As an alternative to the threading of the first axial seat 20, the head 27 of a bolt 23 can be stably positioned within the second axial seat 21, the shank of the bolt passing through the first axial seat 20 and protruding, axially to the flange 15, from the second major base 18.

As an alternative to providing the first axial seat 20, an externally-threaded second shank 29 can be obtained on the flange 15, the second shank protruding axially to the flange 15 from the second major base 18.

The second shank 29 is then caused to pass through one of the plurality of holes 24 provided in desired points on the chassis 3 and then coupled to a complementarily-threaded nut 28 with the interposition of a first washer 25 and of a second, vibration-damping washer 26.

Once the support 1 is associated with the chassis 3, the tube 6 will be inserted through or associated with the means 5 associated with the mudguard 2, which are constituted for example by adapted collars designed to envelop and clamp the tube 6.

Thus it has been found that the invention fully achieves the intended aim and objects, a support having been devised that makes it possible to achieve, rapidly and easily, the anchoring of a mudguard to a vehicle; furthermore such support can be provided in a stable and repetitive manner and, since it entails no welding, can be carried out by personnel with no special training.

The geometry of the support can be developed on progressive transitions, with the absence of tensioning points and consequent fragility which could be the cause of possible breakage.

The surface of the support is furthermore not contaminated by a welding operation and therefore ready to receive surface finish treatments like galvanization, painting, or cataphoresis.

The flange that constitutes the support offers high strength which ensures an optimal connection to the chassis of the vehicle.

The structure that constitutes the support furthermore makes it possible to use tubes of reduced thickness, more commensurate to the workload in that they are not constrained by weldability parameters.

A support is obtained which is also aesthetically improved and which can be provided in solutions that entail the use of a round flange, with female threading or with male threading, or a square flange, or a triangular flange.

It is furthermore possible to provide the support using materials with different characteristics for the tube and the flange, such as, for example, a combination of ferrous materials with composites, or different metals, factors which offer a functional advantage to the final support in its two principal functions: holding the accessory coupled to it (mudguard or the like) and fixing to the chassis (absorption of vibrations).

The invention thus conceived is susceptible to numerous modifications and variations, all of which are within the scope of the appended claims.

The materials used, as well as the dimensions that constitute the individual components of the invention, may of course be more pertinent according to the specific requirements.

The various means of achieving certain different functions certainly need not coexist only in the embodiment shown, but may be present in many embodiments, even if they are not shown.

The characteristics indicated above as advantageous, convenient or the like, may also be missing or be substituted by equivalent characteristics.

The disclosures in Italian Utility Model Application No. 202022000003108 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A support (1) for anchoring a mudguard (2) to a chassis (3) of a vehicle, **characterized in that** it is constituted by a tube (6) at a first end (7) of which a taper (10) with the shape structure of a conic frustum is obtained, within which, by cold-deforming, a complementarily-shaped flange (15) is kept captive, said flange (15) comprising means configured for interconnection with said chassis (3) of said vehicle.

2. The support (1) according to claim 1, **characterized in that** it is constituted by a tube (6) which is internally hollow, of desired thickness, and with a linear extension in which said first end (7) and said second, free end (9) are defined.

3. The support (1) according to one or more of the preceding claims, **characterized in that** at said first end (7) said tube (6) has a taper (10), obtained by cold-deforming, which has the shape of a conic frustum with a first minor base (11) blended with said tube (6) and the first major base (12) facing away and in the direction of said chassis (3) to which said tube (6) is to be coupled.

4. The support (1) according to one or more of the preceding claims, **characterized in that** said tube (6) has, starting from said first end (7), two curves (8a, 8b), mutually opposite and mutually sequential, so that said taper (10) which can be associated with said chassis (3) ends up being arranged, when installed, at a point different from the point of arrangement of said second, free end (9) of said tube (6).

5. The support (1) according to one or more of the preceding claims, **characterized in that** a terminal end (13) of said major base (12) is cold-upset so as to assume an L shape with the end lip (14) arranged on a plane that is substantially perpendicular to a longitudinal axis of said tube (6), said end lip (14) only partially overlapping a diameter of said major base (12) of said taper (10), so as to occupy a space substantially equal to a diameter of said minor base (11).

6. The support (1) according to one or more of the preceding claims, **characterized in that**, prior to the upsetting of said terminal end (13), a complementarily-shaped flange (15) is placed within said taper (10), said flange being frustum-shaped with an annular ridge (16), protruding from the second minor base (17) of said flange (15), of an outside diameter approximately equal to an inside diameter of said tube (6).

7. The support (1) according to one or more of the preceding claims, **characterized in that** an annular perimetric seat (19) is provided at said second major base (18) of said flange (15), for part of its thickness, at which said complementarily-shaped end lip (14) of said terminal end (13) of said taper (10) is cold-upset so as to lock in place/hold captive said flange (15) within said taper (10) with a stable and non-removable connection between the two components.

8. The support (1) according to one or more of the preceding claims, **characterized in that** a first axial seat (20) is provided axially to said flange (15) and communicates, at said second minor base (17) of said flange (15), with a second axial seat (21) which is provided at said annular ridge (16).

9. The support (1) according to one or more of the preceding claims, **characterized in that** said second axial seat (21) has a larger diameter than said first axial seat (20).

10. The support (1) according to one or more of the preceding claims, **characterized in that** said first axial seat (20) and second axial seat (21) combine to define means for interconnecting said tube (6) with said chassis (3).

11. The support (1) according to one or more of the preceding claims, **characterized in that** said first axial seat (20) is internally threaded for interconnection with a complementarily-threaded first shank (22) of a bolt (23) that passes through one of a plurality of holes (24) provided in desired points on said chassis (3), a first washer (25), and a second, vibration-damping washer (26) being arranged on said first shank (22) and interposed between said chassis (3) and the head (27) of said bolt (23).

12. The support (1) according to one or more of the preceding claims, **characterized in that** a nut (28) is stably positioned within said second axial seat (21) and said threaded first shank (22) is screwed therein.

13. The support (1) according to one or more of the preceding claims, **characterized in that** an externally-threaded second shank (29) is obtained on said flange (15) and protrudes, axially to said flange (15), from said second major base (18), said second shank (29) passing through one of said plurality of holes (24) provided in desired points on said chassis (3) and then being coupled to a complementarily-threaded nut (28) with the interposition of a first washer (25) and of a second, vibration-damping washer (26).

14. The support (1) according to one or more of the preceding claims, **characterized in that** within said second axial seat (21) the head (27) of a bolt (23) is stably positioned, the shank of said bolt passing through said first axial seat (20) and protruding, axially to said flange (15), from said second major base (18).
